Europäisches Patentamt

European Patent Office

Office européen des brevets

(19)

(11) Numéro de publication : **0 418 108 B1**

(12) **FASCICULE DE BREVET EUROPEEN**

(45) Date de publication du fascicule du brevet :
**06.04.94 Bulletin 94/14**

(51) Int. Cl.⁵ : **C04B 28/02,** C04B 40/00,
**B28C 5/40**

(21) Numéro de dépôt : **90402347.0**

(22) Date de dépôt : **23.08.90**

(54) **Procédé et produits obtenus par mélange de ciment et de fibres de renfort.**

(30) Priorité : **06.09.89 FR 8911666**

(43) Date de publication de la demande :
**20.03.91 Bulletin 91/12**

(45) Mention de la délivrance du brevet :
**06.04.94 Bulletin 94/14**

(84) Etats contractants désignés :
**AT BE CH DE DK ES FR GB GR IT LI LU NL SE**

(56) Documents cités :
**EP-A- 0 225 932**
**EP-A- 0 251 544**
**EP-A- 0 252 848**
**EP-A- 0 309 609**
**EP-A- 0 333 584**
**GB-A- 2 148 871**

(73) Titulaire : **SAINT-GOBAIN RECHERCHE**
**39 quai Lucien Lefranc**
**F-93300 Aubervilliers (FR)**

(72) Inventeur : **Leroux, Michel**
**20-22, rue des Lyanes**
**F-75020 Paris (FR)**
Inventeur : **Toutlemonde, François**
**16, avenue Emile Zola**
**F-75015 Paris (FR)**
Inventeur : **Bernard, Jean-Luc**
**51, rue André Oudin - Giencourt**
**F-60600 Clermont (FR)**

(74) Mandataire : **Breton, Jean-Claude et al**
**SAINT-GOBAIN RECHERCHE 39, quai Lucien**
**Lefranc**
**F-93300 Aubervilliers Cedex (FR)**

EP 0 418 108 B1

## Description

La présente invention concerne un procède de fabrication d'un mélange à base de ciment contenant des fibres de renfort, et les produits obtenus à partir de ce mélange.

Elle trouve une application particulièrement importante bien que non exclusive, dans le domaine des matériaux en fibro-ciment qui sont utilisés dans le bâtiment pour la fabrication d'éléments de toiture, de plaques ou panneaux de façade, de bas reliefs, etc...

On connaît déjà le renforcement du ciment par des fibres de différents types.

L'intérêt d'armer un matériau minéral pour lui conférer une bonne ductibilité et une meilleure résistance en traction a été compris de longue date, comme le montre l'existence ancienne du torchis ou du béton armé.

Dans le même esprit, on avait donc tout naturellement cherché assez tôt à renforcer les ciments par des fibres. L'utilisation industrielle de fibres d'amiante comme renfort du ciment date par exemple du début du siècle.

Mais, et ce surtout depuis la découverte dans les années 1960 des risques de cancer accrus dûs à la manipulation et à l'inhalation des fibres d'amiante, d'autres types de fibres de renforcement du ciment ont été également envisagés.

On peut citer à cet égard les fibres en acier, en fonte, en verre, en cellulose, les fibres polypropylène et autres fibres synthétiques, les fibres naturelles de jute, de bambou, etc...

Cependant l'utilisation de telles fibres ne connaît pas le développement qu'elle devrait car le mélange ciment-fibres pose des problèmes de fabrication.

A ce titre, les procédés connus de l'art antérieur par filtration, imprégnation, projection, ou mélange des fibres au moment du gâchage du ciment (procédé dit PREMIX) présentent tous des inconvénients qui limitent leur utilisation.

Par exemple, le procédé de fabrication du mélange ciment-fibres par filtration du ciment au travers des fibres ne convient pas à tous les tas de fibres. Celles-ci doivent en effet être assez fines pour former un filtre efficace, et avoir une affinité suffisante avec l'eau, ce qui exclut notamment l'emploi de fibres de verre.

La nécessite de presser les pièces fabriquées interdit par ailleurs, la fabrication de pièces à fort relief. De plus, un circuit d'apport et d'élimination de l'eau utilisée lors de la filtration est nécessaire, ce qui entraîne des coûts importants.

Le procédé de fabrication du mélange ciment-fibres par imprégnation est quant à lui long et en général difficile à mettre en oeuvre, donc coûteux.

La fabrication d'un mélange de ciment et de fibres par projection du ciment et des fibres sur un moule ou une paroi ne convient pas à tous les tas de fibres, comme avec le procédé de fabrication par filtration. Les fibres doivent en effet présenter des caractéristiques de masse et d'aspect qui permettent de les projeter. Il s'agit donc de fibres chères, qui nécessitent une fabrication particulière.

La projection de la pâte de ciment demande l'utilisation de grandes quantités d'eau, d'où des problèmes de vieillissement du produit obtenu par ce procédé et de moins bonnes caractéristiques à terme. Par ailleurs, du fait de sa complexité de mise en oeuvre, le procédé par projection nécessite une main d'oeuvre qualifiée.

Enfin, le procédé consistant à mélanger des fibres au ciment au moment du gâchage (procédé dit PREMIX), tel qu'il est pratiqué dans l'art antérieur, limite considérablement le taux de fibres incorporables à la pâte de ciment. L'augmentation de la viscosité du mélange due à l'ajout des fibres est en général compensée par un dosage initial en eau plus fort. On retrouve donc là les inconvénients du procédé de fabrication par projection, entraînant de moindres performances, à terme, des produits obtenus à partir du mélange. De même, comme pour le procédé de fabrication par projection, la main d'oeuvre doit être qualifiée ce qui rend les procédés connus du type PREMIX coûteux et essentiellement propres à la fabrication en petite série.

La présente invention vise à fournir un procédé de fabrication d'un mélange à base de ciment armé de fibres de renfort, et des produits obtenus à partir d'un tel mélange, répondant mieux que ceux antérieurement connus aux exigences de la pratique, notamment en ce qu'ils autorisent l'utilisation de tous types de fibres de renfort. Les produits formés sont de forte compacité et présentent de bonnes caractéristiques de comportement à terme, et notamment une bonne résistance à la flexion ; le procédé est aisé à mettre en oeuvre, autorise un moulage aisé du mélange, et ce pour un coût acceptable.

Pour cela l'invention part de la constatation faite par les inventeurs que le mélange fibres et ciment est grandement amélioré lorsque on réalise une pâte compacte en mélangeant le ciment avec, pour 100 parties en poids de ciment, environ 5 parties à environ 20 parties en poids d'une première charge de matériau pulvérulent dont le diamètre moyen des grains est compris entre 1/5 et 1/10 du diamètre moyen des grains du ciment et avec environ 20 parties à environ 35 parties en poids d'eau, puis que l'on mélange ensuite au moins une sorte de fibres de renfort à la pâte ainsi obtenue.

Le procédé de l'invention diffère notamment de façon essentielle des procédés du type PREMIX de l'art antérieur de deux façons : par l'ordre des étapes qui y sont réalisées, à savoir l'invention prévoit l'ordre suivant : mélange des poudres et gâchage, puis incorporation des fibres, et par la faible proportion d'eau utilisée, par rapport aux proportions habituelles connues.

Dans le but mentionné ci-dessus, l'invention propose notamment un procédé de fabrication d'un mélange à base de ciment contenant des fibres de renfort caractérisé en ce qu'on forme une pâte en mélangeant du ciment et, pour 100 parties en poids de ciment, environ 5 parties à environ 20 parties en poids d'un premier matériau pulvérulent, dont le diamètre moyen des grains est compris entre 1/5 et 1/10 du diamètre moyen des grains dudit ciment, d'environ 20 parties à environ 35 parties en poids d'eau et au moins un adjuvant (fluidifiant, réducteur d'eau ou dispersant) puis on mélange ladite pâte avec au moins une sorte de fibres de renfort.

Dans des modes de réalisation avantageux de l'invention, on procède au mélange selon l'une et/ou l'autre des modalités suivantes :

- on forme la pâte avec pour 100 parties en poids de ciment, entre 23 parties et 30 parties en poids d'eau,
- pour 100 parties en poids de ciment, on mélange à la pâte environ 2 parties à environ 18 parties en poids de fibres de renfort,
- on forme la pâte en mélangeant de plus avec le ciment et le premier matériau pulvérulent, pour 100 parties en poids de ciment jusqu'à environ 5 parties en poids d'un deuxième matériau pulvérulent dont le diamètre moyen des grains est compris entre 1/5 et 1/10 du diamètre moyen des grains du premier matériau pulvérulent,
- on forme la pâte en ajoutant, pour 100 parties en poids de ciment jusqu'à environ 4 parties en poids d'un adjuvant rhéologique et avantageusement entre 2 et 3 parties,
- on forme la pâte en ajoutant, pour 100 parties en poids de ciment jusqu'à environ 1 partie en poids de produit plastifiant,
- on forme la pâte en mélangeant les différents matériaux secs puis en procédant au gâchage du mélange homogène obtenu,
- le premier matériau pulvérulent est constitué par des grains de diamètre moyen compris entre 3 μm et 20 μm,
- les fibres de renfort présentent un diamètre moyen compris entre environ 3 et 30 μm. L'un des avantages de l'invention est la possibilité d'introduire simultanément plusieurs sortes de fibres. C'est ainsi qu'il est possible d'incorporer dans le mélange des fibres minérales ou de verre dont le diamètre moyen est compris entre environ 10 et 30 μm et de préférence égal à environ 20 μm, et des fibres de même nature dont le diamètre moyen est inférieur à environ 5 μm. Les premières améliorent les propriétés mécaniques du composite (flexion, traction, choc), les secondes améliorent l'étanchéité, la résistance à la microfissuration et à l'abrasion.

L'invention propose également un produit à base de ciment armé de fibres de renfort obtenu à partir du mélange selon le procédé décrit ci-dessus, caractérisé en ce que le produit comporte, pour 100 parties en poids de ciment, environ 5 parties à environ 20 parties en poids d'un premier matériau pulvérulent dont le diamètre moyen des grains est compris entre 1/5 et 1/10 du diamètre moyen des grains du ciment.

Avantageusement, le produit comporte de plus, pour 100 parties en poids de ciment, jusqu'à environ 5 parties en poids d'un deuxième matériau pulvérulent dont les grains présentent un diamètre moyen compris entre 1/5 et 1/10 du diamètre moyen des grains du premier matériau pulvérulent.

Dans un mode de réalisation avantageux le premier matériau pulvérulent est du métakaolin, de diamètre moyen compris entre 3 μm et 20 μm, le deuxième matériau pulvérulent est de la microsilice, les fibres de renfort comprenant de la laine de verre.

L'invention sera mieux comprise à la lecture des explications qui suivent et des tableaux donnés en annexe.

L'invention utilise tout d'abord les résultats connus d'optimisation des proportions entre granulométries des composants des bétons permettant d'en améliorer la compacité, appliquée ici de façon nouvelle à des pâtes de ciment dont la taille du plus gros "granulat" est celle du plus gros grain de ciment.

On sait que plus un produit est compact, plus ses caractéristiques de résistances physiques et mécaniques à terme sont satisfaisantes.

Les espaces interstitiels délimités par les grains d'un produit déterminent sa compacité (ou porosité). Or, en mélangeant une poudre initiale formée de grains d'un diamètre moyen donné avec une charge de produit pulvérulent dont le diamètre moyen des grains est plus faible, on comble partiellement certains espaces interstitiels, ce qui entraîne une plus grande compacité du produit final obtenu.

C'est ce principe qui a été utilisé par les inventeurs qui se sont aperçus de façon empirique que, dans le cas particulier du ciment, les proportions optimales à respecter entre le diamètre moyen des grains dudit ciment et celui de la charge d'un premier matériau pulvérulent étaient d'environ 1/5 à environ 1/10 de l'un par rapport à l'autre, l'adjonction d'une autre charge d'un second matériau pulvérulent, dans des proportions de diamètres moyens entre produits pulvérulents identiques à celles entre ciment et premier produit pulvérulent, améliorant encore la compacité.

Par ailleurs, les inventeurs se sont également aperçus que, de façon inattendue, le respect de ces proportions entre diamètres moyens facilitait grandement le mélange avec les fibres de renfort, qui est l'une des caractéristiques essentielles de l'invention.

A titre d'exemple nullement limitatif des résultats obtenus par les inventeurs pour aboutir à ces proportions, un tableau de mesures de porosité (tableau I) est donné ci-après pour deux compositions typiques de pâte cimentaire réalisées en respectant les proportions entre diamètres de l'invention ; une composition n° 1 sans "second" matériau pulvérulent, et une composition n° 2 avec "second" matériau pulvérulent (en l'occurrence, il s'agit de microsilice).

D'autres mesures des valeurs de granulométrie différentes, mais entrant toujours dans les limites des fourchettes données par l'invention, ont par ailleurs permis aux inventeurs de confirmer lesdites fourchettes.

On voit qu'après 25 cycles d'immersion/séchage des produits obtenus à partir des compositions n° 1 et n° 2, on obtient des porosités (mesurées au pycnomètre à hélium) proches de la porosité optimale théorique.

Les caractéristiques des matériaux utilisés pour ces compositions sont :
- ciment : CPA55 ; diamètre moyen des grains de l'ordre de 60 µm,
- premier matériau pulvérulent : métakaolin ; diamètre moyen de 10 µm,
- deuxième matériau pulvérulent : microsilice ; diamètre moyen de 1 µm,
- un adjuvant utilisé dans sa fonction réducteur d'eau : polynaphtalène sulfonate (connu sous la dénomination LOMAR.D).

## TABLEAU I

| • **Composition 1** | CPA | MK | eau+lomar | Fibres de verre |
|---|---|---|---|---|
| poids en g | 400 | 40 | 120+10 | 36 |

porosité finale = 7,15 %

| • **Composition 2** | CPA | MK | µSi | eau+lomar | Fibres de verre |
|---|---|---|---|---|---|
| poids en g | 400 | 40 | 10 | 100+10 | 36 |

porosité finale = 5,79 %

Le tableau II ci-après donne les valeurs moyennes théoriques maximales pour des empilements de sphères de classes granulométriques du même type que les compositions 1 et 2 ci-dessus.

## TABLEAU II

| • **Composant théorique** | CPA | MK | µSi | vide | Fibres de verre |
|---|---|---|---|---|---|
| en % | 65 | 15,16 | 7,96 | 4,29 | 7,58 |

porosité finale = 4,29 %

4

On constate que ces valeurs théoriques sont proches des valeurs obtenues avec la composition 1 et qu'elles sont encore améliorées avec la composition 2 ; la compacité obtenue pour les produits de l'invention est donc bien optimisée.

Le tableau III donne la composition de différents mélanges à base de ciment et de fibres de renfort. Les valeurs indiquent des masses en grammes.

Ces mélanges sont à l'origine de produits soumis à des tests dont les résultats sont mentionnés dans le tableau IV. Certains produits sont réalisés avec des mélanges selon l'invention et d'autres non, de façon à permettre des comparaisons sur les résultats obtenus.

Les différents mélanges mentionnés dans le tableau III ont été réalisés avec du ciment CPA55. Mais tous autres types de ciment sont possibles. En particulier, un ciment sulfato-pouzzolannique d'origine japonaise commercialisé sous la dénomination CHICHIBU, ou des ciments spéciaux par exemple un ciment alumineux fabriqué par la Société HEIDELBERGER ZEMENT (RFA) sont bien entendu utilisables. Voir à ce titre les tableaux III bis et IV bis en annexe.

Dans le tableau III le "premier" matériau pulvérulent est du métakaolin de diamètre granulométrique moyen de l'ordre de 5 $\mu$m, présentant une surface spécifique BET de 15 à 30 m$^2$/g et des résultats à l'essai dit Essai CHAPELLE (norme BS 6432 de 1984) montrant une consommation de l'ordre de 610 mg de Ca0/g de métakaolin.

Par métakaolin, il faut entendre le produit activé thermiquement de la kaolinite. La formule abrégée du métakaolin peut s'écrire, en utilisant les symboles classiques employés par les cimentiers : $AS_2$ ($A = Al_2O_3$ et $S = SiO_2$).

Il s'obtient par traitement thermique de la kaolinite à des températures variant entre 700 et 900° C pendant des durées de quelques heures.

Bien entendu, d'autres "premiers" matériaux pulvérulents respectant les proportions granulométriques de l'invention par rapport au ciment sont utilisables.

En particulier des craies, des kaolins, des argiles, des dolomies, des microsphères creuses minérales (diamètre moyen de l'ordre de 30 $\mu$m) ou bien de la poudre de Wollastonite (diamètre moyen de l'ordre de 8 à 10 $\mu$m) sont utilisables, sans que cette énumération ne soit en rien limitative.

Le "deuxième" produit pulvérulent utilisé dans le tableau III est constitué par de la microsilice de surface spécifique de 20 m$^2$/mg et de diamètre moyen compris entre 0,3 et 3 $\mu$m.

Ici encore d'autres produits sont utilisables pour réaliser l'invention, comme par exemple du graphite de granulométrie adéquate ou des microfibres de verre broyées dont le diamètre moyen est égal ou inférieur à environ 3 $\mu$m.

Il faut noter encore une fois que ce sont surtout les effets "physiques" observés sur le mélange et les produits qui en sont issus, effets dûs entre autres aux rapports granulométriques des matériaux pulvérulents entre eux et avec le ciment, qui sont importants pour obtenir de bons résultats et permettre une fabrication et une mise en oeuvre aisée du mélange avec les fibres de renfort selon l'invention, plus que les effets chimiques, par exemple des effets pouzzolaniques, des fines et ultra fines utilisées comme premier et second matériaux pulvérulents.

L'adjuvant utilisé dans les mélanges mentionnés au tableau III est du polynaphtalène sulfonate connu sous la dénomination LOMAR.D et dont le diamètre moyen est de l'ordre de 50 $\mu$m.

D'autres adjuvants connus de l'homme du métier sont également utilisables.

Le plastifiant des mélanges du tableau III, qui n'est nullement mentionné de façon limitative, est du carboxyméthylcellulose (CMC) du type connu sous la dénomination BLANOSE (référence AKUCELL MS 710) de diamètre moyen de l'ordre de 40 $\mu$m.

Enfin, plusieurs types de fibres de verre figurent dans les mélanges du tableau III, sans que cela ne soit en rien limitatif du type de fibres à utiliser.

Les fibres employées sont désignées par des lettres dont la signification est la suivante : les fibres $Z_1$ et $Z_2$ sont obtenues selon un procédé d'étirage par fluide et correspondent à des verres alcali-résistants contenant de l'oxyde de zirconium. La fibre $Z_3$ est une fibre continue qui correspond à une composition du même genre, obtenue par étirage mécanique. Les fibres $A_1$ et $A_2$ sont fabriquées à partir d'un verre alumino-magnésien, résistant également à l'attaque d'un milieu alcalin, selon un procédé utilisant l'étirage par fluide ; la première est brute de fabrication, la seconde a subi un cardage préalablement à son emploi. Les fibres $B_1$ et $B_2$ sont obtenues à partir d'un verre à base de laitier et de basalte, selon deux procédés différents utilisant l'étirage par fluide.

Le nombre suivant les références des fibres indique la diamètre moyen desdites fibres (ou filaments) exprimé en $\mu$m.

On donne ci-après la signification des notations utilisées dans la présente demande et notamment dans le tableau IV (notations d'ailleurs tout à fait classiques) :

- MOR ou σr (en MPA) désigne la contrainte maximale de traction mesurée dans un essai de flexion dit flexion en 3 points, au moment de la rupture.

La rupture est définie pour tous les matériaux étudiés comme le maximum de la courbe effet/déformation, bien qu'un tel maximum ne coïncide pas toujours avec une chute brutale de la contrainte encaissée par le matériau.

- $\Sigma r$ (en %) désigne l'élongation à la rupture. L'élongation se calcule par la formule : $\Sigma = 6 \, f/l^2$, ou f est la flèche au centre et l la distance entre appuis.
- LOP (en MPa) exprime la limite de linéarité. C'est le point où la courbe effort/déformation devient non linéaire.
- $\Sigma_{LOP}$ ou $\Sigma_e$ (en %) désigne l'élongation au point limite de linéarité.
- d désigne la densité (humide).
- E (en GPa) est le module d'Young ou module d'élasticité.
- $W_r$ (en J/m²) est l'énergie de rupture.
- $W_e$ (en J/m²) est l'énergie nécessaire pour atteindre le point limite d'élasticité du produit testé.
- "v.a." est l'abréviation de vieillissement accéléré. Le test le plus souvent utilisé est une immersion de 28 jours dans de l'eau à 50° C. On utilise souvent la mention de propriété "à terme" pour des échantillons après "v.a.".
- $I_t$ est l'indice de ténacité. Il désigne le rapport de l'énergie de rupture à l'énergie de flexion emmagasinée jusqu'à la limite de proportionnalité. Cet indice, bien que sujet à de forts aléas, caractérise le comportement du matériau après le "premier signe" de faiblesse.

L'examen des tableaux III et IV montre qu'un ciment contenant des matériaux pulvérulents dans les proportions de l'invention présente des caractéristiques physiques : module de rupture, (MOR), allongement à la rupture ($\Sigma_r$) résistance à la traction, etc, satisfaisantes.

En particulier, les inventeurs ont pu constater qu'on obtient d'excellents résultats avec une pâte où le métakaolin représente seulement 10 % du poids du ciment, alors qu'une stoechiométrie de 30 % de métakaolin par rapport au poids de ciment, a priori plus favorable pour des raisons chimiques, a dû être abandonnée pour des raisons de granulométrie rendant difficile l'introduction des fibres dans la pâte, à moins d'un mouillage plus important mais du coup nocif pour les performances à terme du produit issu du mélange.

Les nombreux essais auxquels les inventeurs ont procédé et dont les tableaux III et IV donnent des exemples, ont confirmé ces résultats.

Un autre paramètre important de l'invention, concerne la proportion d'eau à ajouter à la pâte pour obtenir le mélange compact de l'invention et pouvoir y mélanger les fibres de renfort sans trop d'effort, et relativement rapidement. Un brassage trop vigoureux ou trop long endommage en effet les fibres de renfort.

Notons ici que la chimie de la pâte, ainsi que celle des fibres, joue malgré tout un rôle, suivant que le mouillage est, ou non, favorisé ; par exemple on observe une prise très lente avec le verre $Z_2$, mais au contraire assez rapide avec $B_1$ et $B_2$ qui nécessite moins d'eau, même pour un taux de fibres important.

A partir des tableaux III et IV, on peut dégager les propriétés générales de l'invention, sachant qu'une optimisation des proportions entre composants, tout en restant dans les fourchettes de l'invention, pourra être avantageusement recherchée pour chaque type de fibre et chaque nature chimique plus spécifique de pâte utilisée.

De façon générale on observe que :
- la densité, le module d'Young, et les limites en contraintes sont des fonctions décroissantes du taux en eau;
- les limites en élongation, et l'indice de ténacité sont des fonctions croissantes du taux en eau, mais uniquement à partir d'un seuil eau/ciment (E/C) proche de 0,4.

En observant plus précisément des séries de compositions où seul le taux en eau est modifié, on note que :
- pour une même composition en "poudres" (ciment + matériaux pulvérulents) densité et module d'Young subissent, en fonction du taux en eau, une forte décroissance, jusqu'à un palier correspondant à un excès d'eau;
- l'élongation est une fonction croissante à partir d'un seuil E/C de 0,4;
- la contrainte et l'énergie de rupture présentent des maximums correspondant à un compromis entre un effet positif de l'eau (visible en particulier pour des pâtes à fort taux de fines, ou matériaux pulvérulents, donc relativement sèches) et un effet de décroissance plus ou moins accentué.

Pour mesurer l'importance du dosage en eau, il convient de noter que :
- pour remplir les vides entre matériaux pulvérulents et ciment, le taux en eau nécessaire est de l'ordre de 15 % du volume total (ciment + fibres + matériaux pulvérulents), soit de l'ordre de 15 g pour 100 g de ciment ;

- tout ajout d'eau va rompre, au moins provisoirement, l'empilement compact de la pâte, tant qu'il n'est pas affecté uniquement au mouillage des grains et des fibres ;
- pour obtenir une maniabilité correcte, compte tenu d'un taux d'adjuvants "raisonnable", il est difficile de descendre en dessous d'un rapport en poids entre l'eau et le ciment E/C égal à de l'ordre de 0,2 à 0,25 ;
- enfin pour permettre une bonne prise du ciment, et bien qu'il ne s'agisse que d'une moyenne sur des réactions aux stoechiométries variées, il est nécessaire d'apporter de l'ordre de 25 g d'eau pour 100 g de ciment. Avec un tel dosage on se rapproche donc des conditions de prise sous forme de précipitation d'un "gel seul" pratiquement sans cristallisation, ce qui favorise les propriétés mécaniques et une bonne qualité d'interface entre le ciment et les fibres.

L'intérêt de limiter le taux en eau est non seulement de permettre d'introduire les fibres sans effet de ségrégation et de limiter le retrait et les déformations différées (fluage), mais aussi de permettre grâce aux qualités de compacité de la pâte et au bon interface réalisé entre ciment et fibres de renfort, de bonnes caractéristiques physiques et de bonnes performances de résistance à la rupture à terme.

Les inconvénients d'un faible taux en eau (essentiellement une prise relativement lente et donc une cure assez délicate), peuvent être minimisés ou éliminés en optimisant le taux de fluidifiant.

En faisant référence aux tableaux, et après avoir procédé au test classique de vieillissement accéléré, on observe une amélioration des propriétés mécaniques due à l'ajout de l'adjuvant.

En résumé, les taux en eau et en adjuvant, ont été optimisés par les inventeurs, à partir des nombreuses observations qu'ils ont faites, de la façon suivante : pour 100 parties en poids de ciment environ 20 parties à environ 35 parties en poids d'eau et jusqu'à 4 parties en poids d'adjuvants et avantageusement entre 2 et 3 parties, selon le type de fibres et la composition de la pâte.

Les tableaux III et IV mettent également en évidence les proportions optimales, en poids par rapport au poids en ciment, de fibres à utiliser dans les mélanges de l'invention.

Sur la masse d'échantillons fabriqués par les inventeurs et dont les tableaux présentent des valeurs données à titre d'exemple non limitatifs, ils ont pu mettre en évidence quelques effets assez nets liés à la quantité de fibres.

On observe en effet un accroissement de la limite de linéarité, un accroissement des limites en contraintes, élongation et énergie à la rupture, sont observés pour des teneurs de fibres comprises entre environ 2 parties à environ 18 parties en poids de fibres pour 100 parties en poids de ciment.

On observe par ailleurs, que bien que tous les types de fibres minérales soient envisageables, d'excellents résultats sont obtenus lorsque le renfort se présente sous forme de fibres de verre ou de basalte enchevêtrées.

Les tableaux n° III bis et IV bis montrent sommairement que des résultats avantageux sont également obtenus avec d'autres type de ciments.

On observe par ailleurs que les différents rapports entre poids de ciment et quantité d'eau utilisée, conduisent aux contraintes de rupture suivantes :

- $\sigma_r$ 25 à 30 MPa pour un rapport eau sur ciment de l'ordre de 0,245,
- $\sigma_r$ 20 à 22 MPa pour un rapport eau sur ciment de l'ordre de 0,3.

En revanche l'élongation à la rupture est :

- $\Sigma_r$ 1 à 1,1 pour du CPJ renforcé de basalte (adhérence forte),
- $\Sigma_r$ 2 pour du CPA avec un taux d'eau d'environ 0,3 (adhérence moins forte),
- $\Sigma_r$ 1 à 1,2 pour du CPA avec un taux d'eau moindre (il est alors trop sec donc trop adhérent),
- $\Sigma_r$ est correct pour du ciment blanc, pourvu que E/C < 0,25 (sinon il faut ajouter des fines).

Le caractère crucial du dosage en eau qui apparaît ici a été également vérifié sur divers échantillons par une étude au microscope électronique à balayage.

On va maintenant décrire ci-après un exemple de réalisation du procédé des mélange selon l'invention.

A partir d'un sec contenant de façon pré-mélangée le ciment, une première charge et éventuellement une seconde charge en matériaux pulvérulents, selon les dosages de l'invention, un opérateur ajoute une quantité d'eau, correspondant à une valeur prédéterminée dans les fourchettes indiquées par l'invention (le mélange des poudres peut également avantageusement être effectué par l'opérateur, juste avant le gâchage).

Des adjuvants (fluidifiant, plastifiant, etc...) sont également avantageusement introduits par l'opérateur, avant, pendant ou après l'ajout d'eau ; ils sont fonction du type de ciment, du type de matériaux pulvérulents et du type de fibres de renfort utilisés.

Les mélanges sont réalisés par des mélangeurs classiques, sans qu'il soit nécessaire d'effectuer obligatoirement un malaxage de la pâte avant introduction des fibres.

Peuvent notamment être utilisés les types de mélangeurs suivants : mélangeur à mouvement planétaire, par exemple du type connu sous les dénominations HOBART, PERIER, KENWOOD, ..., mélangeur "OMNI-MIXEUR" (COLLOMATIC), à train valseur (mélangeur développé par HEIRICH), à soc de charrue, etc...

Une fois la pâte obtenue, on ajoute les fibres de renfort.

Ces fibres de renfort peuvent être de tous types connus, en particulier des fibres de verre, broyées ou non broyées, se présentant par exemple sous forme de faisceaux de fibres parallèles ou de laine de verre, comme dans le mode préféré de réalisation de l'invention plus particulièrement décrit ci-dessus, mais également des fibres en polymère ou de tous types tels que ceux évoqués dans la partie introductrice de la présente demande (acier, fonte, etc...).

La "faible" quantité d'eau ajoutée donne à la pâte obtenue un aspect singulièrement "sec". Néanmoins l'emploi de particules de granulométries étagées et de fluidifiant confèrent à la pâte un caractère thixotropique marqué ce qui rend possible l'incorporation aisée des fibres.

Les fibres sont introduites dans la pâte et on mélange la pâte et les fibres pendant un temps suffisant pour atteindre une bonne homogénéité. Le temps global pour ces différentes opérations varié de l'ordre de 30 secondes à l'ordre de 20 minutes selon le type de mélangeur utilisé.

Le mélange est ensuite utilisé pour la fabrication d'un produit, par exemple une tuile.

Le mélange obtenu étant très maniable, il peut notamment et avantageusement être utilisé pour des moulages.

Dans ce cas, il est introduit dans des moules et mis en forme par exemple par vibrage, pendant par exemple de l'ordre de 5 à 15 minutes.

Le type de composition utilisée, et le procédé de mélange selon le mode de réalisation de l'invention plus particulièrement décrit ici, sont à l'origine d'une amélioration incontestable des propriétés physiques des produits fabriqués en ciment renforcés de fibres, en particulier de fibres de verre.

Notamment :
- la rhéologie de la pâte obtenue après incorporation des fibres (par exemple laine de verre ou laine de roche) est caractérisée par une forte viscosité statique et une thixotropie permettant une très bonne maniabilité sous vibration, ce qui rend possible des mises en forme variées par exemple par pompage, coulage sous vibration, pressage, moulage, éventuellement centrifugation ou extrusion,
- pour des produits dont le renfort est constitué en laine de verre ou de roche, on observe des porosités très faibles (jusqu'à 5 % et moins) et d'excellentes propriétés mécaniques statiques (hautes limites élastiques).

A titre d'exemple, et comme on le voit à partir des tableaux III et IV, pour un composite ciment/métakaolin/laine de verre de densité 2 à 2,2, la contrainte de traction maximale à la rupture atteint 30 à 40 MPa en flexion 3 points.

- le procédé permet aussi une amélioration des propriétés des matériaux renforcés de fibres textiles, dits "GRC" par voie PREMIX.

On observe en effet pour ceux-ci, outre une faible porosité, des propriétés statiques et dynamiques exceptionnelles : résistance aux chocs, clouabilité, module de rupture atteignant 50 à 60 MPa pour une élongation d'environ 1 %.

- pour tous les produits fabriqués par le procédé de l'invention, avec des fibres de diamètre adéquat, on observe un comportement sans détérioration notable après vieillissement accéléré (immersion dans l'eau chaude à 50° C, puis immersion/séchage et chocs) et ce quelle que soit la composition chimique des fibres de verre, ou autres, utilisées. Ceci est dû à la forte compacité et au faible taux en eau de la matrice cimentaire du mélange. Le diamètre relativement important des fibres utilisées joue également un rôle.

On a pu observer notamment que certaines fibres de verre, réputées ne pas résister longtemps aux alcalins ou au ciment, ne sont pas dégradées lors du vieillissement des composites réalisés par ce procédé. Le procédé permet donc de se libérer des contraintes liées à la pouzzolanicité des charges introduites, à la résistance du verre aux alcalins, ou à la nécessité de prévoir des adjuvants polymériques.

## TABLEAU III

| | Ciment | Eau | Fluidi-fiant | MK | μ Si | Plasti-fiant | Fibres type | poids |
|---|---|---|---|---|---|---|---|---|
| n° 1 | 100 | 60 | 2,5 | 30 | – | 0,5 | $Z_1$,23 | 9 |
| n° 2 | 100 | 50 | 2,5 | 10 | 10 | 0,5 | $Z_1$,23 | 9 |
| n° 3 | 100 | 50 | 2,5 | 30 | – | – | $Z_1$,23 | 9 |
| n° 4 | 100 | 45 | 2,5 | 10 | – | 0,5 | $Z_1$,23 | 8,5 |
| n° 5 | 100 | 42,5 | 2,5 | 30 | – | – | $Z_1$,23 | 14 |
| n° 6 | 100 | 40 | 2,5 | 10 | 10 | – | $Z_1$,23 | 9 |
| n° 7 | 100 | 40 | 2,5 | 30 | – | – | $Z_1$,23 | 9 |
| n° 8 | 100 | 40 | 2,5 | 5 | 5 | – | $Z_1$,23 | 10 |
| n° 9 | 100 | 35 | 2,5 | 10 | 2,5 | – | $Z_1$,23 | 5,25 |
| n° 10 | 100 | 35 | 2,5 | 10 | 2,5 | 0,5 | $Z_1$ | 5,25 |
| n° 11 | 100 | 35 | 2,5 | 10 | 2,5 | – | $Z_1$ | 17,5 |
| n° 12 | 100 | 30 | 2,5 | 10 | 10 | – | $Z_1$,23 | 9 |
| n° 13 | 100 | 28,25 | 2,5 | 10 | – | – | $Z_1$,40 | 15 |
| n° 14 | 100 | 28,25 | 2,5 | 10 | 2,5 | – | $Z_1$ | 5,25 |
| n° 15 | 100 | 28,25 | 2,5 | 10 | – | – | $Z_1$ | 10 |
| n° 16 | 100 | 25 | 2,5 | 10 | – | – | $Z_1$,40 | 9 |
| n° 17 | 100 | 25 | 2,5 | 10 | – | – | $Z_1$,40 | 10 |
| n° 18 | 100 | 25 | 2,5 | 10 | – | – | $Z_1$,23 | 7,5 |
| | | | | | | | + 40 | + 2,5 |
| n° 19 | 100 | 25 | 2,5 | 10 | – | – | $Z_1$,23 | 5 |
| | | | | | | | + 40 | + 5 |
| n° 20 | 100 | 25 | 2,5 | 10 | 2,5 | – | $Z_1$,23 | 10 |
| n° 21 | 100 | 25 | 2,5 | 10 | 5 | – | $Z_1$,23 | 10 |

## TABLEAU III (suite)

| n° | Ciment | Eau | Fluidifiant | MK | µ Si | Plastifiant | Fibres type | Fibres poids |
|---|---|---|---|---|---|---|---|---|
| n° 22 | 100 | 21,25 | 2,5 | 10 | - | - | $Z_1$ | 9 |
| n° 23 | 100 | 40 | 2,5 | 30 | - | - | $A_1$ | 9 |
| n° 24 | 100 | 40 | 2,5 | 10 | - | 1 | $A_1$ | 7,25 |
| n° 25 | 100 | 35 | 3 | 10 | - | - | $A_1$ | 10 |
| n° 26 | 100 | 30 | 2,5 | 10 | - | - | $Z_1$ | 9 |
| n° 27 | 100 | 30 | 2,5 | 10 | - | - | $A_2$ | 9 |
| n° 28 | 100 | 30 | 2,5 | 10 | - | - | $A_2$ | 15 |
| n° 29 | 100 | 30 | 4,5 | 10 | - | - | $A_2$ | 16 |
| n° 30 | 100 | 30 | 2,5 | 10 | - | - | - | 0 |
| n° 31 | 100 | 27,5 | 2 | 10 | - | - | $A_2$ | 11 |
| n° 32 | 100 | 27,5 | 2,5 | 10 | - | - | $A_2$ | 10 |
| n° 33 | 100 | 30 | 2,5 | 10 | 2,5 | - | $A_2$ | 10 |
| n° 34 | 100 | 27,5 | 2,5 | 10 | 5 | - | $A_2$ | 10 |
| n° 35 | 100 | 26,8 | 1,9 | 10 | - | - | $A_2$ | 8 |
| n° 36 | 100 | 25 | 4,5 | 10 | - | - | $A_2$ | 11 |
| n° 37 | 100 | 25 | 2 | 10 | - | - | $A_1$ | 11 |
| n° 38 | 100 | 25 | 2,5 | 10 | - | - | $A_1$ | 15 |
| n° 39 | 100 | 25 | 2,5 | 10 | - | - | - | 0 |
| n° 40 | 100 | 25 | 2,5 | 10 | - | - | $A_2$ | 5 |
| n° 41 | 100 | 25 | 2,5 | 10 | - | - | $A_2$ | 11 |
| n° 42 | 100 | 25 | 2,5 | 10 | - | - | $A_2$ | 15 |
| n° 43 | 100 | 25 | 2,5 | 10 | - | - | $A_2$ | 7,25 |
| n° 44 | 100 | 30 | 2,5 | 10 | - | - | $Z_2$ | 9 |
| n° 45 | 100 | 30 | 2,5 | 10 | - | - | $Z_2$ | 11 |
| n° 46 | 100 | 30 | 2,5 | 10 | - | - | $Z_2$ | 15 |
| n° 47 | 100 | 27,5 | 2,5 | 10 | - | - | $Z_3$ | 9 |
| n° 48 | 100 | 24,5 | 2,5 | 10 | - | - | $Z_3$ | 9 |
| n° 49 | 100 | 30 | 2,5 | 10 | - | - | | 9 |
| n° 50 | 100 | 30 | 2,5 | 10 | | | | 16 |
| n° 51 | 100 | 27,5 | 2 | 10 | | | | 15 |
| n° 52 | 100 | 25 | 1,5 | 10 | | | | 11 |
| n° 53 | 100 | 24,5 | 2,5 | 10 | | | | 9 |
| n° 54 | 100 | 24,5 | 2,5 | 10 | | | | 9 |

## TABLEAU III (suite)

| : | :Ciment: | Eau | :Fluidi-: | MK:µ Si: | Plasti-: | Fibres | | : |
|---|---|---|---|---|---|---|---|---|
| : | : | : | : fiant : | : | : fiant | :type : | poids | : |
| : n° 55: | 100 | : 24,5: | 2,5 | :10: | : | : | : 9 | : |
| : n° 56: | 100 | : 24,5: | 2,5 | :10: | : | : | : 9 | : |
| : n° 57: | 100 | : 24,5: | 2,5 | :10: | : | : | : 9 | : |

## TABLEAU III BIS

| : | : Type : | Quantité: | Eau: | Fluidi: | MK: | Type de : | Poids de: |
|---|---|---|---|---|---|---|---|
| : | :ciment: | ciment : | : | fiant : | : | fibres : | fibres : |
| : n° 58: | $1_{(CPA)}$: | 100 | :24,5: | 2,5 | :10: | Bas TOR: | 9 : |
| : n° 59: | $2_{(HP)}$ : | 100 | :24,5: | 2,5 | :10: | Bas TOR: | 9 : |
| : n° 60: | $3_{(CPJ)}$: | 100 | :24,5: | 2,5 | :10: | Bas TOR: | 9 : |
| : n° 61: | $4_{blanc}$: | 100 | :24,5: | 2,5 | :10: | Bas TOR: | 9 : |
| : n° 62: | 3 : | 100 | :30 : | 2,5 | :10: | Bas TOR: | 9 : |
| : n° 63: | 4 : | 100 | :30 : | 2,5 | :10: | Bas TOR: | 9 : |

## TABLEAU IV

| : Mélange | : 1 | : 2 | : 3 | : 4 | : 5 | : 6 | : 7 | : 8 : |
|---|---|---|---|---|---|---|---|---|
| : MOR | :14,13 | :11,15 | :16,6 | :19,14 | :34,67 | :13,03 | :17,38 | :20,92: |
| : $\Sigma_r$ | : 4,47 | : 2,33 | : 2,87 | : 2,08 | : 2,40 | : 2,53 | : 2,3 | : 2,32: |
| : LOP | : 9,38 | :10,6 | :13,85 | :16,98 | :33,3 | : 9,86 | :15,2 | :13,72: |
| : $\Sigma_{LOP}$ | : 1,95 | : 1,61 | : 1,59 | : 0,79 | : 2,27 | : 1,81 | : 1,64 | : 1,23: |
| : d | : 1,59 | : 1,61 | : 1,74 | : 1,67 | : - | : 1,71 | : 1,85 | : 2,04: |
| : E | : 5,04 | : 6,39 | : 8,06 | : 9,90 | :12,82 | : 8,64 | : 8,8 | :11,39: |
| : $W_r$ | :311 | :140 | :231 | :164 | :320 | :172 | :181 | :229 : |
| : $W_e$ | :72 | :71 | :87 | :117 | :294 | :44 | :103 | :68 : |
| : $MOR_{v.a.}$ | :13,69 | :14,49 | :19,24 | :14,92 | : - | :18,79 | :20,44 | :16,50: |
| : $\Sigma_{r\ v.a.}$ | : 3,27 | : 4 | : 2,57 | : 1,57 | : - | : 2,07 | : 2,35 | : 1,96: |
| : $LOP_{v.a.}$ | :10,93 | :12,57 | :17,89 | :14,5 | : - | :17,22 | :17,28 | :14,30: |
| : $\Sigma_{LOP\ v.a.}$ | : 2,1 | : 2,73 | : 1,87 | : 1,5 | : - | : 1,57 | : 1,81 | : 1,60: |
| : $d_{v.a.}$ | : 1,89 | : 1,95 | : 1,89 | : 1,92 | : - | : 1,75 | : 1,89 | : 1,87: |
| : $E_{v.a.}$ | : 5,22 | : 4,22 | : 9,11 | :10,73 | : - | :10,86 | : 9,67 | : 9,73: |
| : $I_t$ | : 4,55 | : 1,79 | : 2,73 | : 1,85 | : 1,2 | : 4,36 | : 2,03 | : 1, : |
| : $I_{t\ v.a.}$ | : 2,34 | : 1,44 | : 1,72 | : 1,41 | : - | : 1,68 | : 1,73 | : 1,67: |

## <u>TABLEAU IV (SUITE)</u>

| Mélange | 9 | 10 | 11 | 12 | 13 | 14 | 15 | 16 |
|---|---|---|---|---|---|---|---|---|
| MOR | 19,32 | 17,92 | 25,63 | 23,9 | 22,9 | 16,65 | 20,06 | 29,63 |
| | | | | | 38,7 | | | |
| $\Sigma_r$ | 0,96 | 1,23 | 1,74 | 3,03 | 1,6 | 0,67 | 0,79 | 1,16 |
| | | | | | 2,04 | | | |
| LOP | 19,25 | 19,25 | 19,51 | 18,71 | 15,3 | 16,36 | 18,79 | 22,81 |
| | | | | | 29,4 | | | |
| $\Sigma_{LOP}$ | 0,94 | 0,78 | 1,06 | 1,59 | 0,79 | 0,65 | 0,63 | 1,07 |
| | | | | | 1,31 | | | |
| d | 2,13 | 2,12 | 1,93 | 1,98 | 2,23 | 2,05 | 2,19 | 2,08 |
| | | | | | 2,11 | | | |
| E | 20,20 | 20,73 | 18,63 | 12,31 | 19,64 | 24,67 | 29,7 | 25,8 |
| | | | | | 22,78 | | | |
| $W_r$ | 75 | 110 | 208 | 376 | 176 | 44 | 69 | 138 |
| | | | | | 356 | | | |
| $W_e$ | 73 | 48 | 81 | 116 | 48 | 41 | 47 | 119 |
| | | | | | 150 | | | |
| $MOR_{v.a.}$ | 16,83 | 19,61 | 29,22 | 23,49 | - | 21,65 | 22,21 | - |
| $\Sigma_{r\ v.a.}$ | 0,79 | 1,34 | 2,11 | 1,72 | - | 0,79 | 1,04 | - |
| $LOP_{v.a.}$ | 16,50 | 17,08 | 19,72 | 22,53 | - | 21,6 | 15,89 | - |
| $\Sigma_{LOP\ v.a}$ | 0,77 | 0,9 | 1,11 | 1,36 | - | 0,79 | 0,52 | - |
| $d_{v.a.}$ | 2,13 | 2,95 | - | 2,03 | - | - | - | - |
| $E_{v.a.}$ | 21,54 | 20 | 18,14 | 15,93 | - | 27,5 | 30,66 | - |
| $I_t$ | 1,03 | 2,36 | 2,53 | 3,34 | 3,74 | 1,08 | 1,35 | 1,13 |
| | | | | | 2,36 | | | |
| $I_{t\ v.a.}$ | 1,07 | 1,8 | 3,36 | 1,61 | - | 1 | 3,5 | - |

## TABLEAU IV (SUITE)

| Mélange | 17 | 18 | 19 | 20 | 21 | 22 | 23 | 24 |
|---|---|---|---|---|---|---|---|---|
| MOR | 26,92 | 26,5 | 22,72 | 22,73 | 24,67 | 27,08 | 19,41 | 13,6 |
| $\Sigma_r$ | 2,07 | 2,31 | 1,79 | 2,48 | 2,48 | 1,20 | 1,84 | 3,06 |
| LOP | 26,92 | 25,89 | 22,72 | 22,55 | 22,02 | 17,26 | 19,35 | 13,6 |
| $\Sigma_{LOP}$ | 2,07 | 2,20 | 1,79 | 2,38 | 2,01 | 0,58 | 1,80 | 3,06 |
| d | 2,21 | 2,16 | 2,23 | 2,23 | 2,23 | 2,25 | 1,83 | 1,86 |
| E | 12,81 | 11,50 | 12,45 | 9,49 | 10,74 | 30,37 | 10,43 | 4,78 |
| $W_r$ | 217 | 245 | 159 | 219 | 259 | 153 | 139 | 165 |
| $W_\bullet$ | 217 | 222 | 159 | 213 | 177 | 39 | 137 | 165 |
| $MOR_{v.\bullet.}$ | 13,69 | 14,49 | 19,24 | 14,92 | - | 18,79 | 20,44 | 16,50 |
| $\Sigma_r{}_{v.\bullet.}$ | 1,92 | 2,18 | 2,01 | 2,01 | 2,07 | 0,86 | 1,9 | 2,82 |
| $LOP_{v.\bullet}$ | 29,14 | 33,14 | 31,72 | 27,24 | 29,91 | 13,92 | 16,65 | 10,10 |
| $\Sigma_{LOP}{}_{v.a}$ | 1,86 | 2,18 | 1,89 | 1,98 | 1,86 | 0,5 | 1,88 | 2,73 |
| $d_{v.\bullet.}$ | 2,22 | 2,12 | 2,23 | 2,21 | 2,18 | - | 1,91 | 2,01 |
| $E_{v.\bullet.}$ | 15,91 | 15,13 | 16,84 | 13,6 | 16,13 | 28 | 8,79 | 3,63 |
| $I_t$ | 1 | 1,09 | 1 | 1,05 | 1,51 | 4,15 | 1 | 1 |
| $I_{tv.\bullet.}$ | 1,08 | 1 | 1,15 | 1,03 | 1,25 | 2,79 | 1,05 | 1,07 |

## TABLEAU IV (SUITE)

| Mélange | 25 | 26 | 27 | 28 | 29 | 30 | 31 | 32 |
|---|---|---|---|---|---|---|---|---|
| MOR | 17,88 | 17,06 | 24,6 | 26,3 | 19,71 | 10,13 | 24,53 | 25,59 |
| $\Sigma_r$ | 2,39 | 1,44 | 2,6 | 3 | 2,3 | 1,54 | 2,73 | 2,38 |
| LOP | 17,84 | 16,9 | 24,4 | 24,27 | 18,13 | 10,13 | 18,4 | 21,28 |
| $\Sigma_{LOP}$ | 2,36 | 1,35 | 2,48 | 2,4 | 1,89 | 1,54 | 1,81 | 1,73 |
| d | 2,09 | 2,04 | 1,97 | 1,94 | 2,06 | 2,06 | 2,04 | 2,21 |
| E | 7,63 | 12,39 | 9,86 | 9,8 | 9,48 | 6,58 | 10,11 | 12,41 |
| $W_r$ | 177 | 105 | 257 | 338 | 199 | 63 | 279 | 266 |
| $W_e$ | 168 | 90 | 235 | 226 | 136 | 62 | 143 | 146 |
| $MOR_{v.a.}$ | 20,33 | 18,79 | - | - | 30,41 | 10,01 | 16,84 | 27,43 |
| $\Sigma_r$ v.a. | 2,18 | 2,07 | - | - | 2,09 | 1,47 | 1,86 | 1,75 |
| $LOP_{v.a.}$ | 19,60 | 17,84 | - | - | 29,52 | 10,01 | 14,37 | 27,35 |
| $\Sigma_{LOP}$ v.a | 2,05 | 1,86 | - | - | 1,94 | 1,47 | 1,48 | 1,73 |
| $d_{v.a.}$ | 2,03 | 2,12 | - | - | 2,23 | 2,16 | 2,21 | 2,20 |
| $E_{v.a.}$ | 9,54 | 9,38 | - | - | 15,27 | 7,16 | 9,74 | 15,9 |
| $I_t$ | 1,04 | 1,14 | 1,11 | 1,5 | 1,43 | 1,02 | 3,64 | 1,88 |
| $I_{t v.a.}$ | 1,17 | 1,25 | - | - | 1,18 | 1 | 1,70 | 1,04 |

## TABLEAU IV (SUITE)

| Mélange | 33 | 34 | 35 | 36 | 37 | 38 | 39 | 40 |
|---|---|---|---|---|---|---|---|---|
| MOR | 21,22 | 23,6 | 17,63 | 21,61 | 24,98 | 34,35 | 11,56 | 19,87 |
| $\Sigma_r$ | 2,40 | 2,23 | 2,32 | 2 77 | 2,32 | 2,83 | 1,35 | 1,46 |
| LOP | 20,76 | 2054 | 17,5 | 18,83 | 21,57 | 30,70 | 11,56 | 18,97 |
| $\Sigma_{LOP}$ | 2,21 | 1,61 | 2,29 | 2,12 | 1,86 | 2,35 | 1,35 | 1,34 |
| d | 2,06 | 2,16 | 1,99 | 2,21 | 2,26 | 2,30 | 2,24 | 2,21 |
| E | 9,42 | 12,85 | 7,5 | 9,22 | 11,37 | 13,3 | 8,47 | 14,49 |
| $W_r$ | 221 | 246 | 162 | 269 | 246 | 427 | 63 | 120 |
| $W_•$ | 184 | 130 | 157 | 129 | 161 | 279 | 63 | 96 |
| $MOR_{v.a.}$ | 23,34 | 22,52 | - | 23,65 | 30,05 | 41,98 | 20,22 | 25,09 |
| $\Sigma_{r\ v.a.}$ | 1,77 | 1,56 | - | 1,78 | 1,74 | 2,34 | 1,45 | 1,39 |
| $LOP_{v.a}$ | 21,49 | 22,12 | - | 23,15 | 29,68 | 39,28 | 20,22 | 25,09 |
| $\Sigma_{LOP\ v.a}$ | 1,55 | 1,48 | - | 1,67 | 1,70 | 2,12 | 1,45 | 1,39 |
| $d_{v.a.}$ | 2,05 | 2,18 | - | 2,26 | 2,18 | 2,16 | 2,24 | 2,17 |
| $E_{v.a.}$ | 13,49 | 15,04 | 1,05 | 14 | 17,13 | 17,87 | 13,8 | 17,96 |
| $I_t$ | 1,17 | 1,89 | - | 2,02 | 1,57 | 1,52 | 1 | 1,29 |
| $I_{t\ v.a.}$ | 1,27 | 1,09 | - | 1,16 | 1,03 | 1,19 | 1 | 1 |

## TABLEAU IV (SUITE)

| : Mélange | : 41 : | 42 : | 43 : | 44 : | 45 : | 46 : | 47 : | 48 : |
|---|---|---|---|---|---|---|---|---|
| : MOR | :30,27 | :34,66 | :29,7 | :14,41 | :19,28 | :18,98 | :34,6 | :47,36: |
| : $\Sigma_r$ | : 2,16 | : 2,39 | : 2 | : 2,1 | : 2,18 | : 2,25 | : 8 | : 8,10: |
| : LOP | :30,27 | :34,60 | :29,62 | :13,19 | :16,14 | :18,01 | :15,1 | :18,67: |
| : $\Sigma_{LOP}$ | : 2,16 | : 2,39 | : 2 | : 1,67 | : 1,36 | : 2,03 | : 0,73 | : 0,91: |
| : d | : 2,17 | : 2,18 | : 2,05 | : 2,01 | : 2,03 | : 1,97 | : 2,06 | : 2,01: |
| : E | :13,96 | :14,23 | :14,3 | : 8,38 | :12,42 | :10,18 | :20,45 | :20,63: |
| : $W_r$ | :265 | :325 | :236 | :135 | :197 | :188 | :1632 | :2212 : |
| : $W_e$ | :265 | :325 | :234 | : 87 | : 87 | :142 | : 43 | : 67 : |
| : $MOR_{v.a.}$ | :28,83 | :28,20 | :23,55 | :23,57 | :19,49 | :23,39 | :37,93 | :38,05: |
| : $\Sigma_r$ $_{v.a.}$ | : 1,87 | : 1,93 | : 1,92 | : 3,09 | : 2,34 | : 2,94 | : 4,25 | : 6,16: |
| : $LOP_{v.a}$ | :28,83 | :25,06 | :23,55 | :23,29 | :17,15 | :19,69 | :21,13 | :14,00: |
| : $\Sigma_{LOP}$ $_{v.a}$ | : 1,87 | : 1,66 | : 1,88 | : 3,00 | : 1,91 | : 2,24 | : 0,88 | : 0,73: |
| : $d_{v.a.}$ | : 2,22 | : 2,23 | : 2,21 | : 2,10 | : 2,18 | : 2,07 | : 2,18 | : - : |
| : $E_{v.a.}$ | :15,17 | :14,89 | :12,01 | : 7,88 | : 8,96 | : 8,71 | :24,71 | :20536: |
| : $I_t$ | : 1 | : 1 | : 1,01 | : 1,67 | : 2,35 | : 1,34 | :38,72 | :34,96: |
| : $I_{t v.a.}$ | : 1 | : 1,39 | : 1,05 | : 1,25 | : 1,61 | : 1,90 | :16,28 | :41,07: |

## TABLEAU IV (SUITE)

| Mélange | 49 | 50 | 51 | 52 | 53 |
|---|---|---|---|---|---|
| MOR | 19,63 | 25,47 | 21,28 | 22,29 | 13,19 |
| $\Sigma_r$ | 1,92 | 2,73 | 2,45 | 2,4 | 1,58 |
| LOP | 19,03 | 20,69 | 17,93 | 20,10 | 13,08 |
| $\Sigma_{LOP}$ | 1,77 | 1,99 | 1,88 | 2,10 | 1,55 |
| d | 1,88 | 1,97 | 1,98 | 2,14 | 2,15 |
| E | 10,59 | 10,27 | 9,66 | 10,22 | 8,17 |
| $W_r$ | 155 | 291 | 222 | 242 | 81 |
| $W_\bullet$ | 134 | 161 | 132 | 162 | 79 |
| $MOR_{v.a.}$ | 19,22 | 17,43 | 20,76 | 17,26 | 23,6 |
| $\Sigma_{r\ v.a.}$ | 2,03 | 2,02 | 1,98 | 1,68 | 2,25 |
| $LOP_{v.a}$ | 19,22 | 17,09 | 20,76 | 17,10 | 23,6 |
| $\Sigma_{LOP\ v.a}$ | 2,03 | 1,91 | 1,98 | 1,64 | 2,25 |
| $d_{v.a.}$ | 2,01 | 2,16 | 2,17 | 2,22 | 2,13 |
| $E_{v.a.}$ | 9,21 | 8,88 | 10,32 | 10,37 | 10,20 |
| $I_t$ | 1,17 | 1,86 | 1,84 | 1,44 | 1,02 |
| $I_{t\,v.a.}$ | 1 | 1,1 | 1 | 1,05 | 1 |

## TABLEAU IV (SUITE)

| : Mélange | : 54 | : 55 | : 56 | : 57 : |
|-----------|------|------|------|--------|
| : MOR | : 9,6 | :25,01 | :24,35 | :21,43: |
| : $\Sigma_r$ | : 1,51 | : 1,00 | : 1,13 | : 0,91: |
| : LOP | : 8,99 | :25,01 | :23,07 | :21,43: |
| : $\Sigma_{LOP}$ | : 1,38 | : 1,00 | : 0,96 | : 0,91: |
| : d | : 2,15 | : 1,97 | : 1,96 | : 1,90: |
| : E | : 6,54 | :25,05 | :24,03 | :23,48: |
| : $W_r$ | : 59 | : 97 | :117 | : 76 : |
| : $W_e$ | : 49 | : 97 | : 86 | : 76 : |
| : $MOR_{v.a.}$ | :15,61 | : - | :23,16 | :26,26: |
| : $\Sigma_r$ $_{v.a.}$ | : 2,39 | : - | : 0,93 | : 1,17: |
| : $LOP_{v.a}$ | :15,61 | : - | :23,16 | :26,26: |
| : $\Sigma_{LOP}$ $_{v.a}$ | : 2,39 | : - | : 0,93 | : 1,17: |
| : $d_{v.a.}$ | : 2,12 | : - | : 2,11 | : 1,93: |
| : $E_{v.a.}$ | : 6,44 | : - | :23,06 | :10,37: |
| : $I_t$ | : 1,24 | : 1 | : 1,4 | : 1 : |
| : $I_{tv.a.}$ | : 1 | : - | : 1,03 | : 1 : |

## TABLEAU IV (SUITE)

| Mélange | 58 | 59 | 60 | 61 | 62 | 63 |
|---|---|---|---|---|---|---|
| MOR | 25,01 | 29,59 | 28,99 | 30,85 | 23,89 | 21,28 |
| $\Sigma_r$ | 1,00 | 1,06 | 1,09 | 1,64 | 0,94 | 1,15 |
| LOP | 25,01 | 28,85 | 28,48 | 29,79 | 23,89 | 19,92 |
| $\Sigma_{LOP}$ | 1,00 | 1,02 | 1,05 | 1,13 | 0,94 | 1,03 |
| d | 1,97 | 2,04 | 2,11 | 2,03 | 2,11 | 1,96 |
| E | 25,05 | 28,17 | 26,97 | 26,42 | 25,21 | 19,33 |
| $W_r$ | 97 | 124 | 126 | 157 | 86 | 100 |
| $W_e$ | 97 | 114 | 117 | 131 | 86 | 80 |
| $MOR_{v.a.}$ | – | – | – | – | – | – |
| $\Sigma_r$ v.a. | – | – | – | – | – | – |
| $LOP_{v.a}$ | – | – | – | – | – | – |
| $\Sigma_{LOP}$ v.a | – | – | – | – | – | – |
| $d_{v.a.}$ | – | – | – | – | – | – |
| $E_{v.a.}$ | – | – | – | – | – | – |
| $I_t$ | 1 | 1,08 | 1,10 | 1,19 | 1 | 1,29 |
| $I_{tv.a.}$ | 1 | – | – | – | – | – |

## Revendications

1. Procédé de fabrication d'un mélange à base de ciment contenant des fibres de renfort, **caractérisé en ce qu'**on forme une pâte en mélangeant du ciment et, pour 100 parties en poids de ciment, environ 5 parties à environ 20 parties en poids d'un premier matériau pulvérulent dont les grains présentent un diamètre moyen compris entre 1/5 et 1/10 du diamètre moyen des grains dudit ciment, environ 20 parties à environ 35 parties en poids d'eau et au moins un adjuvant (fluidifiant, réducteur d'eau ou dispersant), puis on mélange ladite pâte avec au moins une sorte de fibres de renfort.

2. Procédé de fabrication selon la revendication 1, **caractérisé en ce qu'**on forme la pâte en mélangeant le ciment avec, pour 100 parties en poids de ciment, entre 23 parties et 30 parties en poids d'eau.

3. Procédé de fabrication selon l'une quelconque des revendications précédentes, **caractérisé en** ce que pour 100 parties en poids de ciment, on mélange environ 2 parties, à environ 18 parties en poids de fibres de renfort.

4. Procédé de fabrication selon l'une quelconque des revendications précédentes, **caractérisé en ce qu'**on forme la pâte en mélangeant de plus avec le ciment et le premier matériau pulvérulent, pour 100 parties en poids de ciment, jusqu'à environ 5 parties en poids d'un deuxième matériau pulvérulent dont le diamètre moyen des grains est compris entre 1/5 et 1/10 du diamètre moyen des grains du premier matériau pulvérulent.

5. Procédé de fabrication selon l'une quelconque des revendications précédentes, **caractérisé en ce qu'**on

20

forme la pâte en ajoutant, pour 100 parties en poids de ciment, jusqu'à environ 4 parties en poids d'adjuvants et avantageusement entre 2 et 3 parties.

6. Procédé de fabrication selon l'une quelconque des revendications précédentes, **caractérisé en ce qu'**on forme la pâte en ajoutant, pour 100 parties en poids de ciment, jusqu'à environ 1 partie en poids de produit plastifiant

7. Procédé de fabrication selon l'une quelconque des revendications précédentes, **caractérisé en ce que** le premier matériau pulvérulent est constitué par du métakaolin de granulométrie moyenne comprise entre 3 $\mu$M ET 20 $\mu$m.

8. Procédé de fabrication selon l'une quelconque des revendications précédentes, **caractérisé en ce qu'**on mélange au préalable les différents matériaux pulvérulents à sec, puis on ajoute l'eau et on mélange l'ensemble afin d'obtenir la pâte désirée.

9. Procédé de fabrication selon l'une quelconque des revendications précédentes, **caractérisé en ce qu'**on mélange la pâte avec au moins deux sortes de fibres présentant des diamètres moyens différents.

10. Procédé de fabrication selon l'une quelconque des revendications précédentes, **caractérisé en ce que** les fibres de renfort mélangées à la pâte comprennent de la laine minérale.

11. Produit à base de ciment armé de fibres de renfort obtenu selon la procédé ci-dessus, **caractérisé en ce que** le produit comporte, pour 100 parties en poids de ciment, environ 5 parties à environ 20 parties en poids d'un premier matériau pulvérulent formé de grains dont le diamètre moyen est compris entre 1/5 et 1/10 du diamètre moyen des grains du ciment.

12. Produit à base de ciment selon la revendication 11, **caractérisé en ce qu'**il comporte de plus, pour 100 parties en poids de ciment, jusqu'à environ 5 parties en poids d'un deuxième matériau pulvérulent constitué de grains dont le diamètre moyen est compris entre 1/5 et 1/10 du diamètre moyen des grains du premier matériau pulvérulent.

13. Produit à base de ciment selon l'une quelconque des revendications 11 et 12, **caractérisé en ce que** le premier matériau pulvérulent est du métakaolin, de diamètre moyen compris entre 3 $\mu$m et 20 $\mu$m, le deuxième matériau pulvérulent est de la microsilice, les fibres de renfort comprenant de la laine de verre.

## Patentansprüche

1. Verfahren zur Herstellung eines Gemischs auf der Grundlage von Verstärkungsfasern enthaltendem Zement, **dadurch gekennzeichnet,** daß durch Vermischen von Zement und von, bezogen auf 100 Gewichtsteile Zement, etwa 5 bis etwa 20 Gewichtsteilen eines ersten pulverförmigen Stoffs, dessen Körner einen mittleren Durchmesser von 1/5 bis 1/10 des mittleren Durchmessers der Körner des Zements aufweisen, etwa 20 bis etwa 35 Gewichtsteilen Wasser und wenigstens einem Zusatzstoff (Verflüssigungsmittel, Mittel zur Verringerung des Wasseranteils oder Dispersionsmittel) ein Brei hergestellt und dieser anschließend mit wenigstens einer Sorte Verstärkungsfasern vermischt wird.

2. Herstellungsverfahren nach Anspruch 1, **dadurch gekennzeichnet,** daß der Brei durch Vermischen des Zements mit zwischen 23 und 30 Gewichtsteilen Wasser auf 100 Gewichtsteile Zement hergestellt wird.

3. Herstellungsverfahren nach Anspruch 1 oder 2, **dadurch gekennzeichnet**, daß etwa 2 bis etwa 18 Gewichtsteile Verstärkungsfasern auf 100 Gewichtsteile Zement vermischt werden.

4. Herstellungsverfahren nach einem der vorhergehenden Ansprüche, **dadurch gekennzeichnet**, daß zur Herstellung des Breis außer dem Zement und dem ersten pulverförmigen Stoff bis zu etwa 5 Gewichtsteile eines zweiten pulverförmigen Stoffs vermischt werden, dessen mittlerer Korndurchmesser 1/5 bis 1/10 des mittleren Korndurchmessers des ersten pulverförmigen Stoffs beträgt.

5. Herstellungsverfahren nach einem der vorhergehenden Anspruche, **dadurch gekennzeichnet,** daß der Brei unter Zugabe von bis zu etwa vier und vorzugsweise von zwischen zwei und drei Gewichtsteilen Zusatzstoff, bezogen auf 100 Gewichtsteile Zement, hergestellt wird.

**6.** Herstellungsverfahren nach einem der vorhergehenden Anspruche, **dadurch gekennzeichnet,** daß der Brei unter Zugabe von bis zu etwa einem Gewichtsteil eines Plastifizierungsmittels, bezogen auf 100 Gewichtsteile Zement, hergestellt wird.

**7.** Herstellungsverfahren nach einem der vorhergehenden Ansprüche, **dadurch gekennzeichnet**, daß der erste pulverförmige Stoff aus Metakaolin mit einer mittleren Korngröße von 3 bis 20 μm besteht.

**8.** Herstellungsverfahren nach einem der vorhergehenden Ansprüche, **dadurch gekennzeichnet,** daß zuerst die verschiedenen pulverförmigen Stoffe trocken vermengt werden, anschließend Wasser zugegeben und das Ganze zur Herstellung des gewünschten Breis vermischt wird.

**9.** Herstellungsverfahren nach einem der vorhergehenden Ansprüche, **dadurch gekennzeichnet,** daß der Brei mit wenigstens zwei Sorten Fasern, die verschiedene mittlere Durchmesser aufweisen, vermischt wird.

**10.** Herstellungsverfahren nach einem der vorhergehenden Ansprüche, **dadurch gekennzeichnet,** daß die mit dem Brei vermischten Verstärkungsfasern Mineralwolle enthalten.

**11.** Erzeugnis auf der Grundlage von nach obigem Verfahren hergestelltem, mit Verstärkungsfasern verstärktem Zement, **dadurch gekennzeichnet,** daß es auf 100 Gewichtsteile Zement etwa 5 bis etwa 20 Gewichtsteile eines ersten pulverförmigen Stoffs umfaßt, der aus Körnern besteht, deren mittlerer Durchmesser 1/5 bis 1/10 des mittleren Korndurchmessers des Zements beträgt.

**12.** Erzeugnis auf der Grundlage von Zement nach Anspruch 11, **dadurch gekennzeichnet,** daß es außerdem auf 100 Gewichtsteile Zement bis zu etwa 5 Gewichtsteile eines zweiten pulverförmigen Stoffs umfaßt, der aus Körnern besteht, deren mittlerer Durchmesser 1/5 bis 1/10 des mittleren Korndurchmessers des ersten pulverförmigen Stoffs beträgt.

**13.** Erzeugnis auf der Grundlage von Zement nach Anspruch 11 oder 12, **dadurch gekennzeichnet,** daß der erste pulverförmige Stöff Metakaolin mit einem mittleren Durchmesser von 3 bis 20 μm, der zweite pulverförmige Stoff Mikrosiliciumdioxid ist und die Verstärkungsfasern Glaswolle enthalten.

## Claims

**1.** Process for manufacturing a cement-based mixture containing reinforcing fibres, characterised in that a paste is formed by mixing cement and, per 100 parts by weight of cement, approximately 5 parts to approximately 20 parts by weight of a first powdery material of which the grains have an average diameter of between 1/5 and 1/10 of the average diameter of the grains of said cement, approximately 20 parts to approximately 35 parts by weight of water and at least one additive (liquefier, water reducer or dispersant), then said paste is mixed with at least one type of reinforcing fibre.

**2.** Manufacturing process according to Claim 1, characterised in that the paste is formed by mixing the cement with between 23 parts and 30 parts by weight of water per 100 parts by weight of cement.

**3.** Manufacturing process according to any one of the preceding claims, characterised in that approximately 2 parts to approximately 18 parts by weight of reinforcing fibres are mixed per 100 parts by weight of cement.

**4.** Manufacturing process according to any one of the preceding claims, characterised in that the paste is formed by further mixing with the cement and the first powdery material, per 100 parts by weight of cement, up to approximately 5 parts by weight of a second powdery material, of which the average grain diameter is between 1/5 and 1/10 of the average diameter of the grains of the first powdery material.

**5.** Manufacturing process according to any one of the preceding claims, characterised in that the paste is formed by adding up to approximately 4 parts by weight of additives and advantageously between 2 and 3 parts per 100 parts by weight of cement.

**6.** Manufacturing process according to any one of the preceding claims, characterised in that the paste is formed by adding up to approximately 1 part by weight of plasticizer per 100 parts by weight of cement.

7. Manufacturing process according to any one of the preceding claims, characterised in that the first powdery material consists of metakaolin with an average grain size of between 3 μm and 20 μm.

8. Manufacturing process according to any one of the preceding claims, characterised in that the different powdery materials are mixed dry beforehand, then the water is added and it is all mixed in order to obtain the desired paste.

9. Manufacturing process according to any one of the preceding claims, characterised in that the paste is mixed with at least two types of fibres having different average diameters.

10. Manufacturing process according to any one of the preceding claims, characterised in that the reinforcing fibres mixed with the paste comprise mineral wool.

11. Cement-based product reinforced with reinforcing fibres obtained according to the above process, characterised in that the product comprises, per 100 parts by weight of cement, approximately 5 parts to approximately 20 parts by weight of a first powdery material formed by grains of which the average diameter is between 1/5 and 1/10 of the average diameter of the grains of cement.

12. Cement-based product according to Claim 11, characterised in that it further comprises, per 100 parts by weight of cement, up to approximately 5 parts by weight of a second powdery material consisting of grains of which the average diameter is between 1/5 and 1/10 of the average diameter of the grains of the first powdery material.

13. Cement-based product according to either of Claims 11 and 12, characterised in that the first powdery material is metakaolin with an average diameter of between 3 μm and 20 μm, the second powdery material is microsilica, and the reinforcing fibres comprise glass wool.